# EUROPEAN PATENT SPECIFICATION

(11) **EP 1 529 318 B1**
(45) Date of publication and mention of the grant of the patent: **12.09.2007**
(21) Application number: 03778961.7
(22) Date of filing: 16.12.2003
(51) Int. Cl.: H01M 8/02, H01M 8/06, H01M 8/12

(54) **GAS PERMEABLE SUBSTRATE AND SOLID OXIDE FUEL CELL USING THE SAME**
GASDURCHLÄSSIGES SUBSTRAT UND SEINE VERWENDUNG IN EINER FESTOXID-BRENNSTOFFZELLE
SUBSTRAT PERMEABLE AUX GAZ ET PILE A COMBUSTIBLE A OXYDE SOLIDE DOTE D'UN TEL SUBSTRAT

(30) Priority: 26.12.2002 JP 2002375781
(43) Date of publication of application: 11.05.2005
(73) Proprietor: NISSAN MOTOR COMPANY LIMITED, Yokohama-shi Kanagawa 221-0023 (JP)
(72) Inventor: SUGIMOTO, Hiromi, Yokohama-shi, Kanagawa 230-0051 (JP); SHIBATA, Itaru, Kamakura-shi, Kanagawa 248-0003 (JP); YAMANAKA, Mitsugu, Yokohama-shi, Kanagawa 235-0034 (JP)
(74) Representative: Grünecker, Kinkeldey, Stockmair & Schwanhäusser Anwaltssozietät
(86) International application number: PCT/JP2003/016092
(87) International publication number: WO 2004/059765

(56) References cited:
- PATENT ABSTRACTS OF JAPAN vol. 2002, no. 02, 2 April 2002 (2002-04-02) -& JP 2001 289397 A (JAPAN METALS & CHEM CO LTD; HONDA MOTOR CO LTD), 19 October 2001 (2001-10-19)
- PATENT ABSTRACTS OF JAPAN vol. 0072, no. 39 (E-206), 25 October 1983 (1983-10-25) -& JP 58 129770 A (HITACHI SEISAKUSHO KK), 2 August 1983 (1983-08-02)
- KUEHN S ET AL: "IMPREGNATION OF NICKEL FOILS WITH NANOCRYSTALLINE CARIA AS ANODES FOR SOLID OXIDE FUEL CELLS SOFC" CERAMIC ENGINEERING AND SCIENCE PROCEEDINGS, COLUMBUS, US, vol. 24, no. 3, 26 January 2003 (2003-01-26), pages 305-310, XP001194516 ISSN: 0196-6219
- SINGHAL S C: "Advances in solid oxide fuel cell technology" SOLID STATE IONICS; SOLID STATE IONICS NOV 2000 ELSEVIER SCIENCE PUBLISHERS B.V., AMSTERDAM, NETHERLANDS, vol. 135, no. 1-4, November 2000 (2000-11), pages 305-313, XP002308186

## Description

### TECHNICAL FIELD

The present invention relates to a gas permeable substrate and a solid oxide fuel cell using the same.

### BACKGROUND ART

In a device using a solid oxide fuel cell (hereinafter, referred to as SOFC), an oxygen sensor, and a functional membrane such as a hydrogen separation membrane, a gas permeable substrate has hitherto been used. For example, sintered ceramics used as a supporting substrate functions as a supporting member and a gas passage. However, in terms of securing gas permeability and strength of the substrate, it has been difficult to reduce the weight and thickness of the device.

From the viewpoint of reduction in weight and thickness, a metallic filter has been proposed, which has a two layer structure of a wire mesh substrate and sintered metal powder or the like coated thereon (JP H7-60035).

Moreover, a metallic filter has been proposed, which is made by applying powder on a substrate obtained by pressing down the wire mesh. This metallic filter is used to filter various oils, gases, liquids, and the like (See

JP 3146387 and JP H8-229320). This filter is used with the pore size adjusted according to the size (particle size etc.) of an object to be filtered.

As the SOFC using a gas permeable substrate, an SOFC has been proposed, in which power generating elements (fuel electrode, electrolyte, and air electrode) are deposited on the porous metallic substrate by spraying (see Plasma Sprayed Thin-Film SOFC for Reduced Operating Temperature, Fuel Cells Bulletin, pp597-600, 2000).

Moreover, a part for hydrogen separation has been proposed, which is constructed by covering the gas permeable substrate with a film, foil, or sheet having a function of hydrogen separation. This part for hydrogen separation is used through gas to be separated, the gas being pressurized in a thickness direction of the substrate.

### DISCLOSURE OF THE INVENTION

However, in JP H7-60035, since the wire mesh protrudes from the sintered metal powder layer, in other words, since the wire mesh is not buried in the sintered metal powder layer, it is difficult to make the substrate thinner.

In the JP 3146837, the metallic filter is constructed by pressing down the wire mesh. Accordingly, it is impossible to obtain a flat surface of the substrate because of part where the wire mesh is protruded, and it is difficult to form a thin film thereon. In addition, since the powder layer is formed on the wire mesh, there has been a problem that the entire filter is made thick.

In the SOFC described in Fuel Cells Bulletin, a separate gas passage is provided, since the substrate cannot be utilized as a gas passage. This is because the upper surface of the porous metallic substrate is finely formed so that film forming by spraying becomes possible. Accordingly, the number of parts has been increased, and cell parts including a collector and the gas passage have been made thick. Therefore, miniaturization thereof has been difficult.

The part for hydrogen separation is used through the gas to be separated, the gas being pressurized in the thickness direction of the substrate. In this case, when the part for hydrogen separation is used only for separating hydrogen, electrical conductivity is not required on the porous substrate. However, when the part for hydrogen separation is used for the SOFC, electrical conductivity is required on the substrate with a collector function given. Moreover, in the SOFC, since the gas flows in a plane direction of the porous substrate, higher gas permeability is required on the porous substrate.

Furthermore, from JP 2001 289 397 a hydrogen storage alloy storing container is known, which comprises a hydrogen storage alloy sheet formed by filling a hydrogen storage alloy powder and a low melting point alloy powder into a metal porous body sheet. Thus, hydrogen being previously stored in the hydrogen storage alloy storing container could be quickly supplied due to the specific assembly of the hydrogen storage alloy storing container.

JP 58 129 770 discloses an electrode for a molten salt fuel cell.

It is an objective of the present invention to provide a lightweight and thin gas permeable substrate which has high gas diffusion and has a high contact rate and adhesion with a functional material, so that an improved membrane and, accordingly, hydrogen separation characteristic could be obtained.

It is further an objective of the present invention to provide a solid oxide fuel cell with decreased size and improved hydrogen separation.

The objective is solved according to the present invention by a gas permeable substrate with the features according to the independent claim 1.

The objective is further solved according to the present invention by a solid oxide fuel cell with the features according to the independent claim 9.

Further preferred embodiments of the present invention are laid down in the further subclaims. In the following, the present invention is explained in greater detail by means of several embodiments thereof in conjunction with the accompanying drawings, wherein:

### BRIEF DESCRIPTION OF THE DRAWINGS

FIG. 1 is a schematic cross-sectional view showing a gas-permeable substrate of the present invention;
FIG. 2 is a schematic cross-sectional view showing the other gas-permeable substrate of the present invention;
FIG. 3 is a schematic cross-sectional view showing the other gas-permeable substrate of the present invention;
FIGs. 4A and 4B are plan views showing a gas-permeable substrate with a frame according to the present invention;
FIG. 5 is a schematic cross-sectional view showing a SOFC of the present invention;
FIG. 6 is a schematic cross-sectional view showing the other SOFC of the present invention;
FIG. 7 is a schematic cross-sectional view showing a gas-permeable substrate of an Example 3;
FIG. 8 is a schematic cross-sectional view showing a gas-permeable substrate of an Example 5;
FIG. 9 is a schematic cross-sectional view showing a gas-permeable substrate of a Comparative Example 1;
FIG. 10 is a SEM view showing a cross-section of a gas-permeable substrate of an Example 1; and
FIG. 11 is a SEM view showing a cross-section of a gas-permeable substrate of an Example 2.

### BEST MODE FOR CARRYING OUT THE INVENTION

For convenience of explanation, one side of the porous metallic plate or the like is described as an upper surface, and the other side thereof is described as a lower surface. However, these are equivalent elements, and a construction in which these elements are substituted for each other is included in the scope of the present invention.

### (First Embodiment)

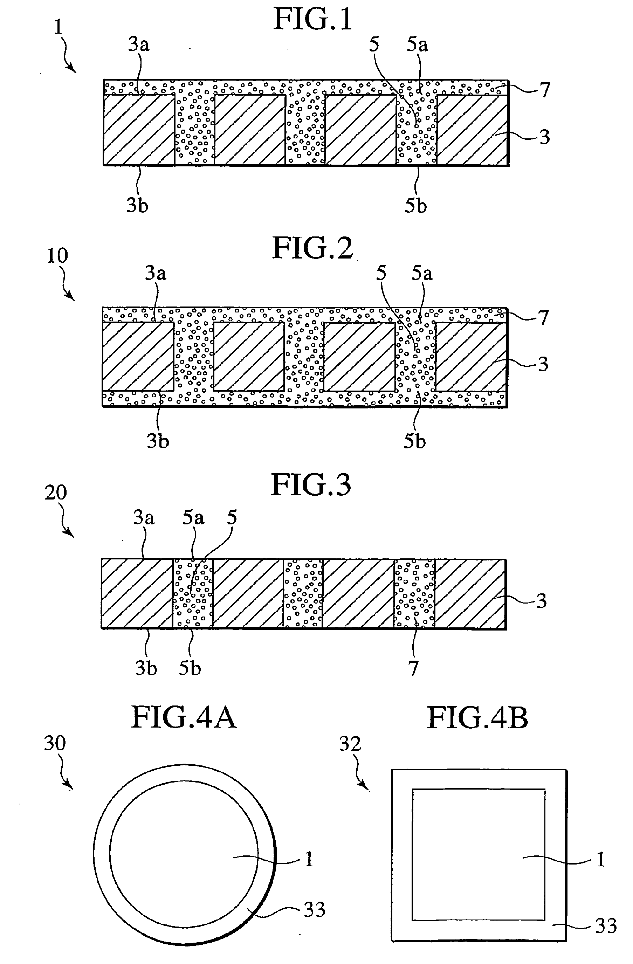

A gas permeable substrate of the present invention includes: a porous metallic plate having a plurality of pores which form openings in the upper surface and/or the lower surface thereof; and particles filled in the pores. The gas permeable substrate is characterized in that at least one of the upper and lower surfaces of the porous metallic plate is substantially smooth. Specific embodiments are shown in FIGs. 1 to 3. As shown in FIG. 1, a gas permeable substrate 1 of the present invention includes a porous metallic plate 3 and a particle layer 7. The porous metallic plate 3 includes a plurality of pores 5, and openings 5a and 5b based on the pores 5 are formed on an upper surface 3a and a lower surface 3b of the porous metallic plate 3. Particles are filled in these pores 5 to form the particle layer 7 and the upper surface thereof is made smooth. The gas permeable substrate 1 of the present invention is thus obtained.

With such a construction, the gas permeable substrate 1 becomes lightweight and thin, and functions as both a supporting member and a gas passage. Moreover, an entire device using this gas permeable substrate 1 can be designed to be lightweight and small. Moreover, since gas passes through holes within the particle layer 7, the gas can pass through the substrate while being efficiently diffused. In terms of the pores 5 included in the porous metallic plate 3, each pore 5 is preferably penetrated in the vertical direction, namely, in the thickness direction of the plate. However, it is sufficient if the pore 5 is penetrated in the vertical direction by having an opening on one surface and communicating with another pore within the metallic plate 3.

The gas permeable substrate 1 of the present invention is typically manufactured as follows. Slurry of the particles is applied to the porous metallic plate 3 by screen printing, green sheet method, dipping, or the like and baked in vacuum, inert atmosphere such as nitrogen or argon, or in reducing atmosphere such as hydrogen. At this time, a pore-forming material or the like can be properly used in order to provide holes in the particle layer 7.

The particle layer 7 covers not less than 30% of the area in the upper surface 3a of the porous metallic plate 3 and/or not less than 30% of the area in the lower surface 3b thereof. In other words, the construction is preferred in which the surface portion of the porous metallic plate 3 is buried in the particles as shown in FIG. 2. This enables gas to be diffused over the entire surface of the porous metallic plate 3 through the particle layer 7. When the covered area is less than 30%, the particle layer 7 is thin, and the strength of the gas permeable substrate 1 is reduced. In the case where the metallic plate 3 includes a function as a collector and the like, the function is sometimes lowered since the contact area between the metallic plate 3 and the particles is reduced with the contact area less than 30%. Specifically, the contact area between the metallic plate 3 and the particles is reduced, and electrons may not be efficiently transferred between the particle layer 7 and the metallic plate 3.

The particles filled in the pores 5 and the particles covering the upper and lower surfaces 3a and 3b of the porous metallic plate 3 may be of the same material or different materials.

In the light of gas permeability and durability of the porous metallic plate, it is preferable that the particles constituting the particle layer 7 are made of ceramics or a composite material of ceramics and metal. Examples of the ceramics include NiO, CuO, Al₂O₃, TiO₂ ceria solid solution, stabilized zirconia, lanthanum cobalt oxide, and lanthanum manganese oxide. Examples of the metal include nickel, nickel-boron alloy, platinum, platinum-lead alloy, and silver. For the composite material of ceramics and metal, materials obtained by arbitrarily mixing both can be used. The particles have a diameter of about 0.1 to 10 µm, and preferably, are sintered particles.

The gas permeable substrate 1 of the present invention is characterized in that the surface of the porous metallic plate, namely, any one of or both of the upper and lower surfaces 3a and 3b are substantially smooth. Accordingly, the porous metallic plate 3 can be covered with another thin film layer with good adhesion. Even if the pores 5 are not filled with the particles until the surface of the porous metallic plate 3 and the openings becomes flat, an arbitrary thin film layer can be formed on the surface. Specifically, since the porous metallic plate is reduced in thickness as described later, in some cases, the openings and the surface of the metallic plate cannot be made completely flat in some cases by filling the pores with the particles. Therefore, in the gas permeable substrate of the present invention, the surface thereof is somewhat uneven in some cases, but the surface is substantially smooth. Accordingly, the adhesion with another thin film layer is greatly improved compared to the conventional art. Moreover, since the surface of the metallic plate 3 is formed to be flat by filling the pores 5 with the particles, an arbitrary thin film layer can be formed on the surface regardless of size of the pores 5.

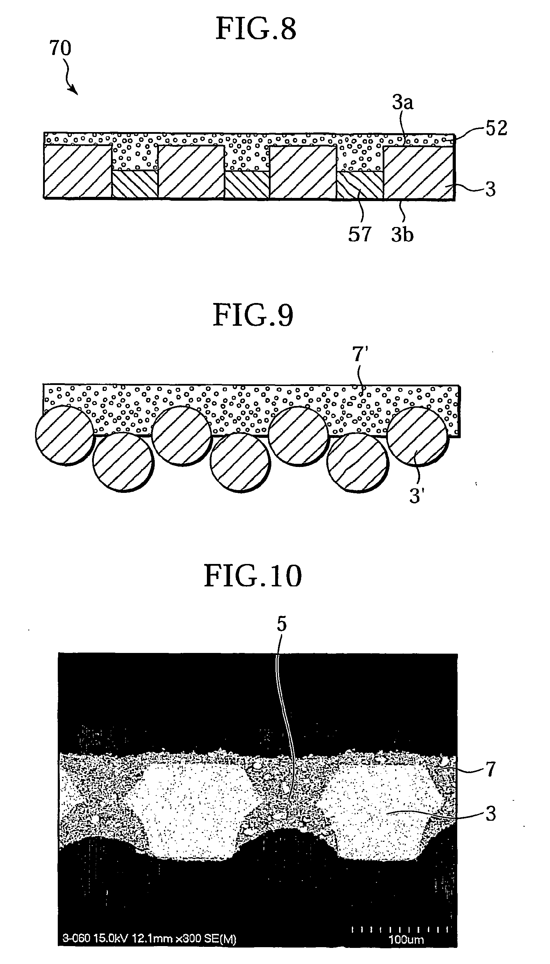

For such a porous metallic plate 3, for example, sintered metal body such as foam metal, a metal film with pores formed by chemical etching, and a metal film with pores formed by punching with a laser or electron beam can be used. In the case where the porous metallic plate is thin and the shape or the openings thereof cannot be maintained, a frame is provided on the outside thereof to support the porous metallic plate. Specifically, as shown in FIGs. 4A and 4B, when a frame 33 is provided in the periphery of the gas permeable substrate 1, gas permeable substrates 30 and 32 with improved mechanical strength and the pores 5 maintained, can be obtained. For example, as shown in FIG. 10, when the porous metallic plate 3 is etched from the both sides, a shape suitable for filling particles can be obtained.

For the materials constituting the porous metallic plate 3, stainless steel (SUS), Inconel, nickel, silver, platinum, copper, or arbitrary combinations of these metals can be used. This enables the porous metallic plate 3 to have electrical conductivity. It is preferable that the thickness of the porous metallic plate is within a range of 0.03 mm to 1 mm in the light of reduction in weight and thickness of a device. When the thickness is less than 0.03 mm, the strength is small, and when the thickness is more than 1 mm, the plate is thick and heavy, and therefore, the gas permeable substrate cannot be made thin.

For the pore-forming material added to form the particle layer 7, a material which is decomposed by baking to make the particle layer porous can be used, such as carbon and an organic material.

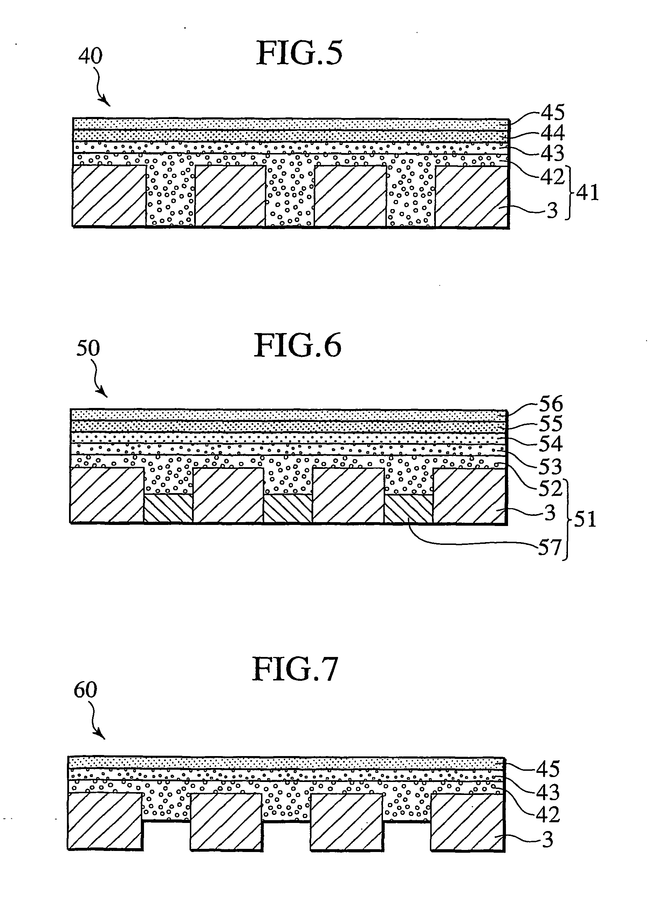

As described above, according to the present invention, the pores of the porous metallic plate are filled with particles, and the surface thereof is substantially smooth. Accordingly, it is possible to provide a lightweight and thin gas permeable substrate which has high gas diffusion and a high contact rate and adhesion with the functional material. Herein, the particle layer 7 is formed within the pores 5 and on the upper surface 3a in FIG. 1. However, as shown in FIG. 2, the gas permeable substrate of the present invention may be a gas permeable substrate 10 in which the particle layer 7 is provided in the pores 5 and the upper and lower surfaces 3a and 3b of the porous metallic plate 3. This enables the strength of the gas permeable substrate to be further increased. As shown in FIG. 3, the gas permeable substrate of the present invention may be a gas permeable substrate 20 in which the particle layer 7 is provided only within the pores 5. Thus, a gas permeable substrate formed into a thin film can be obtained. Moreover, as shown in FIG. 7, it is not necessary that all the pores 5 of the porous metallic plate 3 are filled with the particle layer 7, and ever if the gas permeable substrate has the pores filled with particles to some extent and has a smooth upper surface, the gas permeable substrate is within the technical scope of the present invention.

The gas permeable substrate 1 of the present invention is characterized in that the surface of the porous metallic plate 3 is substantially smooth. However, this "substantially" is an expression made taking into account various inevitable errors in a manufacturing process. The scope including the inevitable errors also belongs to the technical scope of the present invention as long as a desired effect can be obtained.

### (Second Embodiment)

Next, a detailed description will be given of a solid oxide fuel cell (SOFC) using the gas permeable substrate of the present invention. As for the construction of the solid oxide fuel cell of this embodiment, similar parts to those of the first embodiment are given the same numerals in the drawings, and overlapping description will be omitted.

The SOFC of the present invention is constructed by using the gas permeable substrate of the first embodiment. Specifically, the SOFC is constructed by stacking single cells, each of which includes a power generating element stacked on the upper surface and/or the lower surface of the gas permeable substrate. Since the surface of the gas permeable substrate of the present invention is smooth, a thin and lightweight power generating element can be formed on the entire gas permeable substrate, and an SOFC operating at low temperature can be obtained. Hereinafter, a detailed description will be given using FIGs. 5 and 6. The power generating element indicates a stacked body including a fuel electrode, an electrolyte, and an air electrode, or intermediate layers when needed. The stacking is not limited to coupling the single cells in the thickness direction thereof, and also involves the coupling in the plane direction.

As shown in FIG. 5, there is an SOFC 40 as the SOFC of the present invention, which includes an electrolyte layer 43, an intermediate layer 44, and an air electrode layer 45 formed on a gas permeable substrate 41. The gas permeable substrate 41 includes a fuel electrode layer 42 formed on the porous metallic plate 3. Since the gas permeable substrate 41 of the present invention has a smooth surface, the electrolyte layer 43, the intermediate layer 44, and the air electrode layer 45 can be formed to be thin and uniform. Moreover, a fuel electrode material is used for the particle layer within the gas permeable substrate. Accordingly, reactivity between the diffused fuel gas (hydrogen gas, hydrocarbon gas, or the like) and oxygen ions is increased, and as a result, the power generation efficiency can be increased.

The SOFC of the present invention can be an SOFC in which the pores of the porous metallic plate are filled with a reforming catalyst and an electrode material and a stacking structure including two or more layers is formed in the pores. Herein, the electrode material is a concept including a fuel electrode material constituting the fuel electrode layer, an air electrode material constituting the air electrode layer, and an intermediate layer material constituting the intermediate layer. Specifically, as shown in FIG. 6, a gas permeable substrate 51 can be used in which a reforming catalyst layer 57 and a fuel electrode layer 52 are provided within the pores 5 of the porous metallic plate 3. An SOFC 50 of the present invention can be obtained by providing a first intermediate layer 53, an electrolyte layer 54, a second intermediate layer 55, and an air electrode layer 56 on the gas permeable substrate 51. In the SOFC 50, since the reforming catalyst layer 57 and the fuel electrode layer 52 are provided within the pores 5 of the porous metallic plate 3, fuel gas can be supplied to the fuel electrode layer 52 after flowing through the reforming catalyst layer 57 to be reformed so as to have a preferable gas composition. Moreover, since the reforming catalyst and the fuel electrode material are arranged within the porous metallic plate, the SOFC can be further reduced in thickness.

The SOFC 40 of the present invention has a structure in which the intermediate layer 44 is provided between the electrolyte layer 43 and the air electrode layer 45. The SOFC 50 of the present invention has a structure in which the first intermediate layer 53 is provided between the fuel electrode layer 52 and the electrolyte layer 54, and the second intermediate layer 55 is provided between the electrolyte layer 54 and the air electrode layer 56. Since the intermediate layer is provided between the fuel electrode layer and the electrolyte layer, the contact resistance between the fuel electrode layer and the electrolyte layer can be reduced. Moreover, since the intermediate layer is provided between the electrolyte layer and the air electrode layer, the resistance to ionization reaction of oxygen molecules can be reduced. Accordingly, ionization of oxygen molecules is promoted, and the power generation efficiency can be increased. It is preferable to provide the intermediate layers between the fuel electrode layer and the electrolyte layer and between the electrolyte layer and the air electrode layer, but it is possible to obtain the SOFC having high power generation efficiency without the intermediate layers. The most preferred embodiment is the SOFC shown in FIG. 5, namely, the SOFC 40, which is obtained by providing the fuel electrode layer 42 in the porous metallic plate 3 to form the gas permeable substrate 41 with the upper surface made smooth, and then stacking the electrolyte layer 43, the intermediate layer 44 and the air electrode layer 45. The SOFC 40 is the most preferred embodiment also from the viewpoint of reduction in thickness and weight.

In the SOFC 50 of the present invention, the pores 5 of the porous metallic plate 3 are filled with the reforming catalyst layer 57 and the fuel electrode layer 52, but the present invention is not limited to this. The pores may be filled with another electrode material to be formed into a two layer structure. Specifically, the fuel electrode layer 52 and the first intermediate layer 53 can be provided within the pores 5. In the case of an SOFC not using the intermediate layer, the fuel electrode layer and the electrolyte layer may be provided within the pores. The fuel gas can be made suitable by providing the reforming catalyst layer 57, but the reforming catalyst is not required to be provided.

The power generating element and the reforming catalyst can be formed in the gas permeable substrate by sputtering, deposition, aerosol deposition, ion plating, ion clustering, laser beam ablation, spray thermal decomposition, or the like. Moreover, the power generating element and the reforming catalyst can be formed by sequentially using any of these methods.

For the fuel electrode material, nickel, nickel cermet, Ni-yttria stabilized zirconia (YSZ) cermet, Ni-samaria doped ceria (SDC) cermet, platinum, and the like can be used. For the electrolyte layer material, stabilized zirconia can be used. For the air electrode material, lanthanum cobalt oxide (La₁₋ₓSrₓCoO₃, etc.), lanthanum manganese oxide (La₁₋ₓSrₓMnO₃, etc.), and the like can be used. For the material of the reforming catalyst layer, transition metals can be used such as platinum (Pt), palladium (Pd), cobalt (Co), rhodium (Rh), nickel (Ni), iridium (Ir), rhenium (Re), and group 8 transition metals can also be used such as ruthenium (Ru), and iron (Fe). Further, the material of the reforming catalyst layer can also be metal oxide such as aluminum oxide (Al₂O₃), magnesium oxide (MgO), chromium oxide (Cr₂O₃), silicon oxide (SiO₂), tungsten oxide (WO₂, WO₃, etc.), zirconium oxide (ZrO₂), cerium oxide (CeO₂), and bismuth oxide (Bi₂O₃). For the intermediate layer material, samaria-doped ceria (SDC) and the like can be used.

In the SOFC using the gas permeable substrate of the present invention, the porous metallic plate 3 can serve as a collector since the porous metallic plate 3 uses an electrical conductive material. Accordingly, when the gas permeable substrate of the present invention is used as part of the SOFC, the electrode material can be used for the particle layer, and the porous metallic plate can be used as the collector. The electrode material is supported by the collector, so that the gas permeable substrate can be made thinner. Furthermore, since the contact area between the electrode material and the collector is increased, the electrical performance can be improved.

Moreover, since the surface of the gas permeable substrate of the present invention is smooth, it is possible to form a thin and lightweight power generating element on the entire substrate and obtain the SOFC operating at low temperature. Moreover, since part of the power generating element, namely, electrode material is filled in the substrate, the contact area is increased, and an SOFC having good strength and gas diffusion is obtained.

In the SOFC 40 of FIG. 5, the air electrode layer 45, the intermediate layer 44, the electrolyte layer 43, and the fuel electrode layer 42 are shown in this order beginning from the upper surface of the SOFC 40, but the order thereof may be the fuel electrode layer 42, the electrolyte layer 43, the intermediate layer 44, and the air electrode layer 45 beginning from the upper surface. Moreover, also in the SOFC 50 of FIG. 6, the stacking order may be reversed.

Hereinafter, the present invention will be described in further detail using examples, but the present invention is not limited to these examples.

### (Example 1)

As shown in FIG. 1, for the porous metallic plate 3, a plurality of pores of φ = 0.1 mm were provided by photo etching in an etching board which was composed of SUS 304 and 0.1 mm thick. Subsequently, for the particle layer 7, paste of the fuel electrode material which was composed of Ni-SDC and had a particle size of 2 µm was applied with a thickness of 0.12 mm on the porous metallic plate 3 by screen printing, and then baked at 1050 °C in H₂ reducing atmosphere. In this manner, the gas permeable substrate shown in FIG. 1 was obtained. FIG. 10 shows an enlarged photograph of a section of this gas permeable substrate.

### (Example 2)

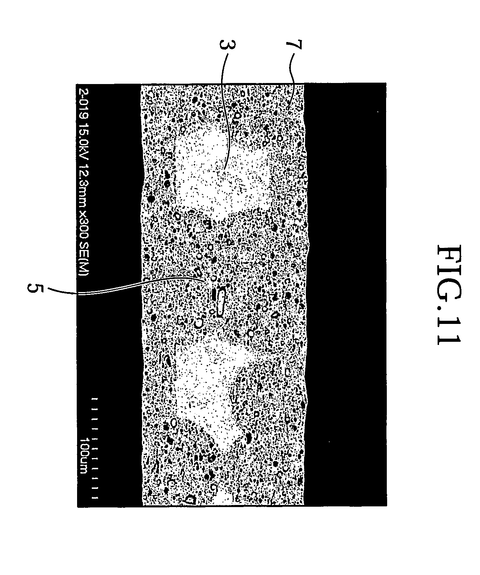

As shown in FIG. 2, for the porous metallic plate 3, foam metal which was composed of Pt and 1 mm thick and had a porosity of 98% was obtained by sintering of metal powder. Subsequently, for the particle layer 7, paste of the fuel electrode material which was composed of Ni-YSZ and had a particle size of 5 µm was applied with a thickness of 1.2 mm on the porous metallic plate 3 by dipping, and then baked at 1050 °C in H₂ reducing atmosphere. In this manner, the gas permeable substrate shown in FIG. 2 was obtained. FIG. 11 shows an enlarged photograph of a section of this gas permeable substrate.

### (Example 3)

As shown in FIG. 7, for the porous metallic plate 3, pores of φ = 0.2 mm were provided by laser processing in a punching board which is composed of Ni and 0.2 mm thick. Subsequently, for the fuel electrode layer, a fuel electrode material which was composed of Ni-YSZ and has a particle size of 2 µm was pressed and attached with a thickness of 0.15 mm on the porous metallic plate 3 by the green sheet method, and then baked at 1050 °C in H₂ reducing atmosphere to obtain a gas permeable substrate provided with the fuel electrode layer 42. Further, for the thin film power generating element, the obtained gas permeable substrate was covered by screen printing with an electrolyte material which was composed of YSZ and has a particle size of 0.03 µm to form the electrolyte layer 43. The obtained electrolyte layer 43 was covered with an air electrode material which was composed of SSC (Sm and Sr added cobalt oxide) and had a particle size of 5 µm by screen printing with a thickness of 10 µm to form the air electrode layer 45. In this manner, an SOFC cell 60 shown in FIG. 7 was obtained. In the SOFC cell 60, power generation of 0.1 W/cm² was confirmed.

### (Example 4)

As shown in FIG. 3, for the porous metallic plate 3, a plurality of pores of φ = 0.1 mm were provided by photo etching in an etching board, which is composed of SUS 304 and 0.1 mm thick. Subsequently, for the particle layer 7, paste of the fuel electrode material which was composed of Ni and had a particle size of 10 µm was applied with a thickness of 0.12 mm on the porous metallic plate 3 by screen printing, and then baked at 1050 °C in H₂ reducing atmosphere. In this manner, the gas permeable substrate 20 shown in FIG. 3 was obtained.

### (Example 5)

As shown in FIG. 8, for the porous metallic plate 3, a plurality of pores of φ = 0.1 mm were provided by photo etching in an etching board, which was composed of SUS 304 and 0.1 mm thick. Subsequently, paste of the fuel electrode material which was composed of Ni-SDC and had a particle size of 2 µm was applied on the upper surface 3a with a thickness of 60 µm by screen printing to form the fuel electrode layer 52. Furthermore, paste of the reforming catalyst layer material which was composed of Pt and had a particle size of 3 µm was applied on the lower surface 3b with a thickness of 60 µm by screen printing, and then baked at 1050 °C in H₂ reducing atmosphere to form the reforming catalyst layer 57. In this manner, the gas permeable substrate 70 shown in FIG. 8 was obtained.

### (Comparative Example 1)

As shown in FIG. 9, for a porous metallic plate 3', metallic mesh, which was composed of SUS 304, 0.25 mm thick, and φ = 0.1 mm, was obtained by plain Dutch weaving. Subsequently, for a particle layer 7', paste of a fuel electrode material which was composed of Ni-SDC and had a particle size of 2 µm was applied on the obtained metallic mesh at a thickness of 0.1 mm by screen printing, and then baked at 1050 °C in H₂ reducing atmosphere to obtain a gas permeable substrate as shown in FIG. 9.

In the examples 1 to 5, the gas permeable substrates which had good adhesion between the substrate and the particles and were made thin were obtained. Since there was the fuel electrode layer on the upper surface of the porous metallic plate and within the pores in each of the gas permeable substrates of the examples 1 to 3 and 5, the gas was diffused on the upper surface of the metallic plate and efficiently transferred. In the example 2, since the fuel electrode layers were on the upper and lower surfaces of the porous metallic plate, the stress from the upper and lower surfaces was well balanced, and the durability of the substrate was improved. In the example 3, the thin SOFC cell further including the power generating element on the gas permeable substrate was easily obtained. Furthermore, in the example 3, the fuel electrode material was pressed and attached by the green sheet method, which is an easy manufacturing method, so that man-hours were reduced. In the example 4, since the fuel electrode layer was formed within the pores, the adhesion between the fuel electrode layer and the substrate material was good. In the example 5, since the fuel electrode layer and the reforming catalyst layer were provided within the pores, it became possible to further reduce the thickness. On the contrary, in the comparative example 1, since the metallic mesh is covered with the fuel electrode layer, the fuel electrode layer was thickened. Moreover, it is inferred that the adhesion between the porous metallic plate and the fuel electrode layer was low since the contact area between the porous metallic plate and the fuel electrode layer was small. Moreover, when the particle layer is made thin, it is impossible to obtain a smooth surface because of the surface shape of the porous metallic plate 3'.

Although the invention has been described above by reference to certain embodiments of the invention, the invention is not limited to the embodiments described above will occur to these skilled in the art, in light of the teachings. The scope of the invention is defined with reference to the following claims.

### INDUSTRIAL APPLICABILITY

As explained above, according to the present invention, the pores of the porous metallic plate are filled with the particles and the surface thereof is smoothed. Therefore, it is possible to provide a thin and lightweight gas permeable substrate which has high gas diffusion and has a high contact rate and adhesion with the functional material, and to provide a solid oxide fuel cell using the same.

## Claims

1. A gas permeable substrate (1,10,20,30,32,41,51), comprising:
a porous metallic plate (3) having a plurality of pores (5) having openings (5a,5b) in an upper surface (3a) and/or a lower surface (3b) of the porous metallic plate (3); and
particles filled in the pores (5) and forming a particle layer (7),
wherein at least one of the upper surface (3a) and the lower surface (3b) of the porous metallic plate (3) is substantially smooth, and each pores (5) penetrates the porous metallic plate (3) in a thickness direction thereof and forms a gas passage, respectively, and wherein not less than 30% of the upper surface (3a) and/or the lower surface (3b) of the porous metallic plate (3) is covered with the particles.

2. A gas permeable substrate according to claim 1, wherein the particles are constituted by any one of ceramics and a composite material of ceramics and metal.

3. A gas permeable substrate according to claim 1 or 2, wherein the particles includes a reforming catalyst and an electrode material, and a stacked structure having not less than two layers is formed within each of the pores.

4. A gas permeable substrate according to claim 3, wherein the electrode material forms at least a layer selected from a group consisting of an air electrode layer (45), a fuel electrode layer (42), and an intermediate layer (44).

5. A gas permeable substrate according to one of the claims 1 to 4, wherein the porous metallic plate (3) is any one of a sintered metal body, an etching board, and a punching board.

6. A gas permeable substrate according to one of the claims 1 to 5, wherein the porous metallic plate (3) is a collector.

7. A gas permeable substrate according to one of the claims 1 to 6, wherein the porous metallic plate includes at least one type of metal selected from a group consisting of stainless steel, Inconel, nickel, silver, platinum, and copper.

8. A gas permeable substrate according to one of the claims 1 to 7, wherein a thickness of the porous metallic plate (3) is within a range of 0.03 mm to 1 mm.

9. A solid oxide fuel cell, comprising:
a gas permeable substrate (1,10,20,30,32,41,51) having a porous metallic plate (3) which includes a plurality of pores (5) having openings (5a,5b) in an upper surface (3a) and/or a lower surface (3b) of the porous metallic plate (3); and
particles filled in the pores (5) and forming a particles layer (7),
wherein at least one of the upper and lower surfaces (3a,3b) of the porous metallic plate (3) are substantially smooth, each pores (5) penetrates the porous metallic plate (3) in a thickness direction thereof and forms a gas passage, respectively, and single cells are stacked, each single cell including power generating elements stacked on an upper surface and/or a lower surface of the gas permeable substrate (1,10,20,30,32,41,51), and wherein not less than 30% of the upper surface (3a) and/or the lower surface (3b) of the porous metallic plate (3) is covered with the particles.

## Patentansprüche

1. Gasdurchlässiges Substrat (1, 10, 20, 30, 32, 41, 51), aufweisend:
eine poröse metallische Platte (3), die eine Mehrzahl von Poren (5) mit Öffnungen (5a, 5b) in einer oberen Oberfläche (3a) und / oder einer unteren Oberfläche (3b) der porösen metallischen Platte (3) hat;
Partikel, eingefüllt in die Poren (5) und die eine Partikelschicht (7) bilden,
wobei zumindest eine von der oberen Oberfläche (3a) oder der unteren Oberfläche (3b) der porösen metallischen Platte (3) im Wesentlichen glatt ist, und jede der Poren (5) jeweils die poröse metallische Platte (3) in einer Richtung der Dicke derselben durchdringt und einen Gaskanal bildet, und wobei nicht weniger als 30% der oberen Oberfläche (3a) und / oder der unteren Oberfläche (3b) der porösen metallischen Platte (3) mit den Partikeln abgedeckt ist.

2. Gasdurchlässiges Substrat nach Anspruch 1, wobei die Partikel aus einem von Keramik- oder einem zusammengesetztes Material aus Keramik und Metall gebildet ist.

3. Gasdurchlässiges Substrat nach Anspruch 1 oder 2, wobei die Partikel einen reformierenden Katalysator und ein Elektrodenmaterial enthalten und ein gestapelter Aufbau, der nicht weniger als zwei Schichten enthält, innerhalb jeder der Poren gebildet ist.

4. Gasdurchlässiges Substrat nach Anspruch 3, wobei das Elektrodenmaterial zumindest eine Schicht bildet, die aus einer Gruppe ausgewählt ist, die aus einer Luftelektrodenschicht (45), einer Kraftstoffelektrodenschicht (42) und einer Zwischenschicht (44) besteht.

5. Gasdurchlässiges Substrat nach einem der Ansprüche 1 bis 4, wobei die poröse metallische Platte (3) eine ist aus einem gesinterten Metallkörper, einer geätzten Platte oder eine gestanzten Platte.

6. Gasdurchlässiges Substrat nach einem der Ansprüche 1 bis 5, wobei die poröse metallische Platte (3) ein Kollektor ist.

7. Gasdurchlässiges Substrat nach einem der Ansprüche 1 bis 6, wobei die poröse metallische Platte zumindest eine Art von Metall enthält, ausgewählt aus einer Gruppe, die aus rostfreiem Stahl, Inconel, Nickel, Silber, Platin und Kupfer besteht.

8. Gasdurchlässiges Substrat nach einem der Ansprüche 1 bis 7, wobei eine Dicke der porösen metallischen Platte (3) innerhalb des Bereiches von 0,03 mm bis 1 mm ist.

9. Festkörperoxid- Brennstoffzelle, aufweisend:
ein gasdurchlässiges Substrat (1, 10, 20, 30, 32, 41, 51) mit einer porösen metallischen Platte (3), die eine Mehrzahl von Poren (5) mit Öffnungen (5a, 5b) in einer oberen Oberfläche (3a) und / oder einer unteren Oberfläche (3b) der porösen metallischen Platte (3) enthält; und
Partikel, eingefüllt in die Poren (5) und die eine Partikelschicht (7) bilden,
wobei zumindest eine von der oberen oder unteren Oberfläche (3a, 3b) der porösen metallischen Platte (3) im Wesentlichen glatt ist, jede der Poren (5) jeweils die poröse metallische Platte (3) in einer Richtung der Dicke derselben durchdringt und jeweils einen Gaskanal bildet, und einzelne Zellen gestapelt sind, wobei jede einzelne Zelle , die Energieerzeugungselemente enthält, gestapelt auf einer oberen und / oder unteren Oberfläche des gasdurchlässigen Substrats (1, 10, 20, 30, 32, 41, 51), und wobei nicht weniger als 30% der oberen Oberfläche (3a) und / oder der unteren Oberfläche (3b) der porösen metallischen Platte (3) mit den Partikeln abgedeckt ist.

## Revendications

1. Substrat perméable aux gaz (1,10,20,30,32,41, 51), comprenant :
une plaque métallique poreuse (3) ayant une pluralité de pores (5) ayant des ouvertures (5a,5b) dans une surface supérieure (3a) et/ou une surface inférieure (3b) de la plaque métallique poreuse (3) ; et
des particules remplissant les pores (5) et formant une couche de particules (7),
dans lequel au moins l'une de la surface supérieure (3a) et de la surface inférieure (3b) de la plaque métallique poreuse (3) est substantiellement lisse, et chacun des pores (5) pénètre dans la plaque métallique poreuse (3) dans la direction d'une épaisseur de celle-ci et forme un passage de gaz, respectivement, et dans lequel pas moins de 30% de la surface supérieure (3a) et/ou de la surface inférieure (3b) de la plaque métallique poreuse (3) est recouvert par les particules.

2. Substrat perméable aux gaz selon la revendication 1, dans lequel les particules sont constituées par l'un quelconque parmi une céramique et un matériau composite de céramique et de métal.

3. Substrat perméable aux gaz selon la revendication 1 ou 2, dans lequel les particules comprennent un catalyseur de reformage et un matériau d'électrode, et une structure empilée n'ayant pas moins de deux couches est formée à l'intérieur de chacun des pores.

4. Substrat perméable aux gaz selon la revendication 3, dans lequel le matériau d'électrode forme au moins une couche choisie dans un groupe constitué par une couche d'électrode à air (45), une couche d'électrode à combustible (42,) et une couche intermédiaire (44).

5. Substrat perméable aux gaz selon l'une des revendication 1 à 4, dans lequel la plaque métallique poreuse (3) est l'une quelconque parmi un corps métallique fritté, une carte à graver, et une carte à perforer.

6. Substrat perméable aux gaz selon l'une des revendications 1 à 5, dans lequel la plaque métallique poreuse (3) est un collecteur.

7. Substrat perméable aux gaz selon l'une des revendications 1 à 6, dans lequel la plaque métallique poreuse comprend au moins un type de métal choisi dans un groupe constitué par l'acier inoxydable, l'inconel, le nickel, l'argent, le platine et le cuivre.

8. Substrat perméable aux gaz selon l'une des revendications 1 à 7, dans lequel une épaisseur de la plaque métallique poreuse (3) est comprise dans une gamme de 0,03 mm à 1 mm.

9. Pile à combustible à oxyde solide, comprenant :
un substrat perméable aux gaz (1,10,20,30,32,41, 51) ayant une plaque métallique poreuse (3) qui comprend une pluralité de pores (5) ayant des ouvertures (5a,5b) dans une surface supérieure (3a) et/ou une surface inférieure (3b) de la plaque métallique poreuse (3) ; et
des particules remplissant les pores (5) et formant une couche de particules (7),
dans laquelle au moins l'une des surfaces supérieure et inférieure (3a,3b) de la plaque métallique poreuse (3) est substantiellement lisse, chacun des pores (5) pénètre dans la plaque métallique poreuse (3) dans la direction d'une épaisseur de celle-ci et forme un passage de gaz, respectivement, et des cellules individuelles sont empilées, chaque cellule individuelle incluant des éléments générateurs d'énergie empilés sur une surface supérieure et/ou une surface inférieure du substrat perméable aux gaz (1,10,20,30,32,41,51), et dans laquelle pas moins de 30% de la surface supérieure (3a) et/ou de la surface inférieure (3b) de la plaque métallique poreuse (3) est recouvert par les particules.
